# EUROPÄISCHE PATENTANMELDUNG

(11) **EP 1 070 985 A1**
(43) Veröffentlichungstag der Anmeldung: **24.01.2001**
(21) Anmeldenummer: 99114145.8
(22) Anmeldetag: 20.07.1999
(51) Int. Cl.: G03B 27/73

(54) **Farbsequentielle fotoelektrische Abtastvorrichtung**

(71) Anmelder: GRETAG IMAGING Trading AG, 5430 Wettingen (CH)
(72) Erfinder: Lehmann, Mathias, 8044 Zürich (CH)
(74) Vertreter: Schwabe - Sandmair - Marx

(57) **Zusammenfassung**

Die farbsequentielle fotoelektrische Abtastvorrichtung für transparente Vorlagen umfasst eine Lichtquelle (1) zur Beleuchtung einer positionierten Vorlage (V), einen Farbverschluss (F) zur sequentiellen farblichen und intensitätsmässigen Modulation des die Vorlage beaufschlagenden Lichts, einen fotoelektrischen Flächensensor (7), der von der Vorlage durchgelassenes Licht empfängt und zweidimensional bildpunktweise in elektrische Abtastsignale umwandelt, und optische Mittel (6), um die Vorlage (V) auf den Flächensensor (7) abzubilden, sowie eine Elektronik (8) zur Ansteuerung des Flächensensors (7) und zur Auslesung der von diesem erzeugten Abtastsignale. Der Farbverschluss (F) besteht aus einer Kombination von einem drehbar angetriebenen Filterrad (20) und mindestens einem zum Filterrad koaxial drehbar angetriebenen Blendenrad (30), wobei das Filterrad (20) und das mindestens eine Blendenrad (30) mit unterschiedlichen Drehgeschwindigkeiten rotieren, welche zu einander in einem starren Verhältnis stehen.

Durch die Kombination eines kontinuierlich drehenden Filterrads 20 mit einem oder mehreren kontinuierlich drehenden Blendenrad 30 bzw. -rädern 30 und 40 entfällt die zeitaufwendige Beschleunigung von Filtern oder Blenden, so dass extrem kurze Messzyklen möglich sind. Gleichzeitig können aber durch ein schneller als das Filterrad rotierendes Blendenrad auch ausreichend steile Anstiegs- und Abfallflanken der Hell- und Dunkelphasen (kurze Öffnungs- und Schliesszeiten) und so eine effizientere Ausnutzung des Messlichts erreicht werden.

## Beschreibung

Die Erfindung betrifft eine farbsequentielle fotoelektrische Abtastvorrichtung für transparente Vorlagen, insbesondere Bilder auf fotografischen Filmen, gemäss dem Oberbegriff des unabhängigen Anspruchs.

Bei der Herstellung von fotografischen Kopien in modernen Printern werden die Kopiervorlagen - üblicherweise fotografisches Filmmaterial - bildpunktweise fotoelektrisch abgetastet.Die dabei ermittelten Abtastwerte werden für den eigentlichen Kopierprozess, insbesondere die Steuerung der Belichtung, ausgewertet. Bei der immer stärker aufkommenden digitalen Bildherstellung werden Vorlagen ebenfalls bildpunktweise mit sehr hoher Auflösung fotoelektrisch abgetastet, wobei die Abtastwerte die gesamte Bildinformation darstellen und zur fotografischen oder drucktechnischen Aufzeichnung auf ein Trägermedium verwendet werden.

Für die fotoelektrische Abtastung von Filmmaterial stehen eine Reihe von bekannten Methoden und Abtastgeräten zur Verfügung. Prinzipiell ist dabei zu unterscheiden zwischen einer farbsimultanen und einer farbsequentiellen Abtastung. Bei der farbsimultanen Abtastung wird das von der abgetasteten Vorlage stammende Messlicht in drei oder mehrere Farbkanäle aufgeteilt und gleichzeitig einer entsprechenden Anzahl von den einzelnen Farbkanälen zugeordneten fotoelektrischen Wandlern zugeführt. Bei der farbsequentiellen Abtastung erfolgt die Aufteilung in die einzelnen Farbkanäle zeitlich hintereinander, wobei das Messlicht jeweils ein und denselben fotoelektrischen Wandler beaufschlagt. Die vorliegende Erfindung befasst sich ausschliesslich mit der farbsequentiellen fotoelektrischen Abtastung von Vorlagen.

Eine typische bekannte farbsequentiell arbeitende Abtasteinrichtung für fotografische Filme umfasst eine Weisslichtquelle zur Beleuchtung der abzutastenden Vorlagen und ein zweidimensionales Feld von fotoelektrischen Wandler-Elementen, einen sog. Flächensensor, der z.B. auf CCD-Basis realisiert sein kann und auf den die abzutastenden Vorlagen mittels einer geeigneten Optik abgebildet werden. Im Strahlengang zwischen der Lichtquelle und den Vorlagen befindet sich ein Farbverschluss, mit dem das die Vorlagen beaufschlagende Licht sequentiell in den gewünschten Farben eingefärbt bzw. abgeblockt werden kann. Typischerweise wird mit drei oder vier Farben beleuchtet bzw. in diesen drei bzw. vier Farben gemessen. Die totale Abblockung des Lichts erfolgt während der Positionierung (Transport) der Vorlagen im Abtastfenster sowie während des Auslesens der Abtastsignale aus dem Flächensensor. Die drei bzw. vier Farben sind typischerweise Rot, Blau und Grün bzw. Rot, Blau, Grün und Infrarot. Die Messung im Infrarot-Kanal erlaubt es u.a., mittels geeigneter Bildverarbeitungsalgorithmen Störungen wie Kratzer und dgl. rechnerisch aus dem abgetasteten digitalen Bild zu entfernen.

Für farbsequentielle Abtastvorrichtungen prinzipiell geeignete Farbverschlüsse existieren in zahlreichen Ausführungsformen. Typisch sind kontinuierlich rotierende Filterräder oder in den Beleuchtungsstrahlengang individuell einschieb- oder schwenkbare Farbfilter in Kombination mit einschieb- oder schwenkbaren Blenden.

An moderne fotoelektrische Abtastvorrichtungen werden heute sehr hohe Leistungsanforderungen gestellt. Typischerweise stehen nur etwa 150-200 ms für den kompletten Abtastvorgang einer Vorlage zur Verfügung. Während dieser Zeitspanne muss die Vorlage transportiert und positioniert und sequentiell in den drei oder vier Farben ausgemessen werden. Von dieser sehr kurzen Zeitspanne wird typischerweise rund die Hälfte für Transport und Positionierung benötigt, so dass für die eigentliche farbsequentielle Abtastung nur rund 70-100 ms übrig bleiben, die ausserdem noch durch für die nach jeder einzelnen Belichtung erfolgende Auslesung des Flächensensors erforderliche Dunkelphasen unterbrochen sind. Der Flächensensor wird also typischerweise pro Belichtung jeweils nur während ca. 10-20 ms mit Licht beaufschlagt.

Bei diesen extrem kurzen Hellphasen, während welcher der Flächensensor Licht einer der drei oder vier Farben empfängt, ist es sehr wichtig, dass die Öffnungs- und Schliesszeiten des Farbverschlusses im Vergleich zur Länge der Hellphasen sehr viel kürzer sind. Unter Öffnungs- und Schliesszeit wird dabei die Zeitdauer verstanden, die der Farbverschluss für den Übergang vom vollständig geschlossenen in den vollständig geöffneten Zustand und umgekehrt benötigt, so dass das Messlicht (abgesehen von der farblichen Filterung) vollständig durchgelassen bzw. vollständig abgeblockt wird.

Theoretisch könnte die zeitliche Abfolge der für die farbsequentielle Abtastung erforderlichen Hell- und Dunkelphasen mittels eines kontinuierlich rotierenden Filterrads durch eine entsprechende Einteilung und Anordnung der Farbfilter und der zwischen diesen liegenden lichtundurchlässigen Bereiche realisiert werden. In der Praxis ergeben sich aber mit einem solchen Filterrad als Farbverschluss relativ lange Öffnungs- und Schliesszeiten, die für Hochgeschwindigkeitsanwendungen ungeeignet sind, weil sie zu einer unzureichenden Belichtung des Flächensensors führen würden. Ausserdem ist die zeitliche Abfolge der Hell- und Dunkelphasen bei einem solchen Filterrad starr durch den Aufbau des Filterrads vorgegeben und lässt sich nur durch Auswechseln des Filterrads an sich ändernde Gegebenheiten anpassen.

Farbverschlüsse mit individuell einschwenkbaren Farbfiltern und Blenden erlauben zwar variable, anpassbare Hell- und Dunkelphasen; die Beschleunigung der Filter und Blenden benötigt aber verhältnismässig viel Zeit, so dass diese Art von Farbverschlüssen für die hier zur Diskussion stehenden Hochgeschwindigkeitsanwendungen zu langsam und deshalb nicht geeignet sind.

Ausgehend von diesem Stand der Technik ist es eine Aufgabe der vorliegenden Erfindung, eine farbsequentiell arbeitende fotoelektrische Abtastvorrichtung der gattungsgemässen Art dahingehend zu verbessern, dass sie einerseits auch für extreme Hochgeschwindigkeitseinsätze geeignet ist und anderseits die Abfolge und die Längen der einzelnen Hell- und Dunkelphasen des Farbverschlusses mit einfachen Mitteln variiert und sich verändernden Gegebenheiten angepasst werden können.

Die Lösung dieser der Erfindung zugrundeliegenden Aufgabe ergibt sich aus den im kennzeichnenden Teil des unabhängigen Anspruchs beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: eine Prinzipskizze eines Ausführungsbeispiels der erfindungsgemässen Abtastvorrichtung mit zwei Blendenrädern,
- Fig. 2: ein typisches Filterrad in Aufsicht,
- Fig. 3: ein erstes beispielsweises Blendenrad in Aufsicht,
- Fig. 4: ein zweites beispielsweises Blendenrad in Aufsicht und
- Fig. 5 - 6: je ein Zeit-Diagramm von zwei beispielsweisen zyklischen Abfolgen von Hell- und Dunkelphasen.

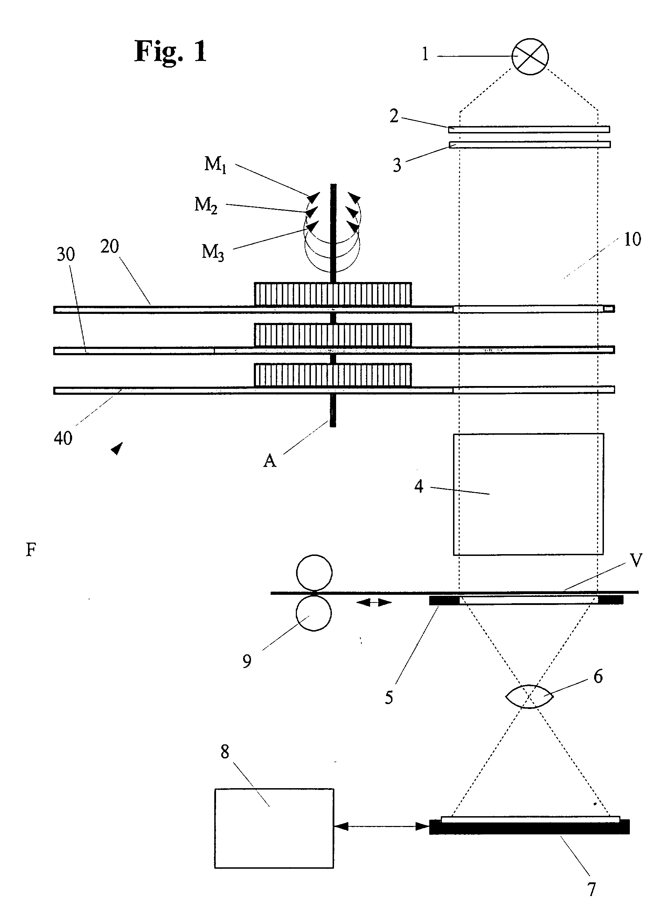

Die in Fig. 1 dargestellte Abtastvorrichtung umfasst eine z.B. als Halogenlampe ausgebildete Weisslichtquelle 1, zwei Vorfilter 2 und 3 zur Aufbereitung des Messlichts, einen als Ganzes mit F bezeichneten, farbsequentiell arbeitenden Farbverschluss, einen z.B. als Lichtmischschacht ausgebildeten Lichtmischer 4, eine Bühne 5 für die körperliche Positionierung einer abzutastenden transparenten Vorlage V, eine Abbildungsoptik 6 und einen z.B. als zweidimensionales Feld von CCD-Fotodioden ausgebildeten fotoelektrischen Flächensensor 7, eine Elektronik 8 zur Ansteuerung des Flächensensors 7 und zur Auslesung der von diesem erzeugten Abtastsignale sowie durch Walzen 9 symbolisierte Mittel zum Transport der Vorlagen V auf die Bühne 5 und von dieser wieder weg. Die Bühne 5 kann unter Umständen entfallen, wenn durch andere Massnahmen gewährleistet ist, dass die abzutastende Vorlage V während der Abtastung definiert im Beleuchtungsstrahlengang positioniert ist. Die Transportmittel 9 können auch Bestandteil eines anderen Geräts sein, in welches die Abtastvorrichtung eingebaut ist.

Das von der Lichtquelle 1 ausgehende und durch die Vorfilter 2 und 3 aufbereitete Licht durchsetzt den Farbverschluss F, wird im Lichtmischer 4 über die Querschnittsfläche des mit 10 bezeichneten Beleuchtungsstrahlengangs örtlich homogenisiert und beaufschlagt dann die auf der Vorlagenbühne 5 positionierte abzutastende Vorlage V. Die transparente Vorlage V wird mittels der Abbildungsoptik 6 auf den Flächensensor 7 abgebildet. Dieser löst die abzutastende Vorlage V örtlich in einzelne Bildpunkte auf und wandelt die Intensität des von jedem einzelnen Bildpunkt der Vorlage ausgehenden Messlichts in ein entsprechendes elektrisches Abtastsignal um. Die Vorlage V und damit auch der Flächensensor 7 wird dabei gesteuert durch den Farbverschluss F sequentiell jeweils für eine bestimmte Belichtungsdauer mit Messlicht dreier oder vierer verschiedener Farben beaufschlagt, und die bei jeder Belichtung resultierenden Abtastsignale werden nach jeder Belichtung von der Elektronik 8 ausgelesen.

Soweit entspricht die erfindungsgemässe Abtastvorrichtung in Aufbau und Funktion herkömmlichen farbsequentiellen Abtastvorrichtungen, so dass sich für den Fachmann eine detailliertere Erläuterung erübrigt. Die Unterschiede der erfindungsgemässen Abtastvorrichtung gegenüber dem Stand der Technik liegen lediglich im speziellen Aufbau des Farbverschlusses F. Im folgenden wird darauf näher eingegangen.

Der Farbverschluss F besteht erfindungsgemäss aus einer Kombination von einem an sich bekannten Filterrad und einem oder mehreren, an sich ebenfalls bekannten Blendenrädern. Im Ausführungsbeispiel der Fig. 1 sind zwei Blendenräder 30 und 40 vorgesehen.

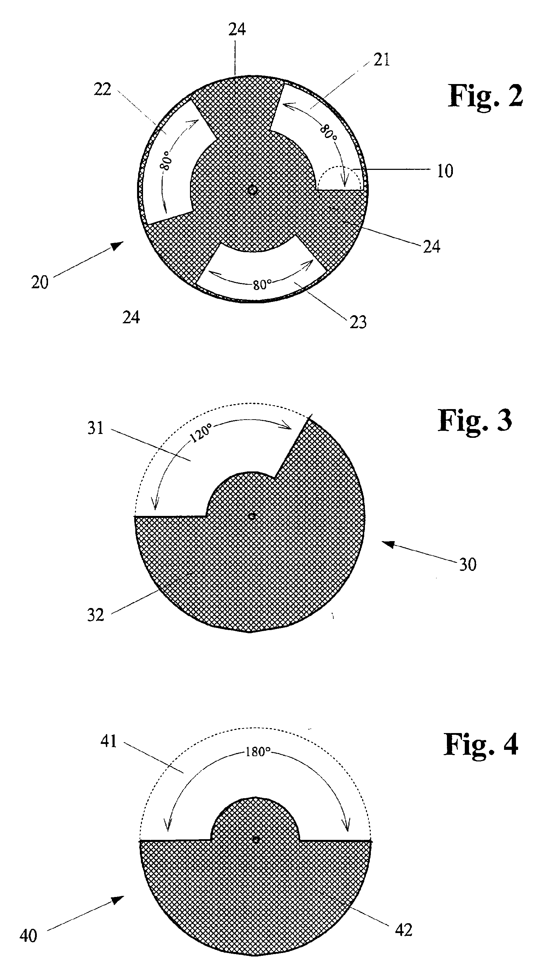

Das Filterrad 20 und jedes Blendenrad - hier die beiden Blendenräder 30 und 40 - sind um eine gemeinsame, zur optischen Achse des Beleuchtungsstrahlengangs 10 parallele Drehachse A drehbar gelagert und durch je einen durch Pfeile M₁, M₂ und M₃ symbolisierten Antriebsmotor drehbar angetrieben. Die Drehachse befindet sich vollständig ausserhalb des Beleuchtungsstrahlengangs 10, das Filterrad 20 und die beiden Blendenräder 30 und 40 decken den Querschnitt des Beleuchtungsstrahlengangs 10 vollständig ab. Die Lage des Beleuchtungsstrahlengangs 10 relativ zum Filterrad 20 und damit auch zu den beiden Blendenrädern 30 und 40 ist aus Fig. 2 ersichtlich.

Das Filterrad und alle Blendenräder drehen sich mit unterschiedlichen Drehgeschwindigkeiten, die zu einander in starren Verhältnissen stehen. Die Drehgeschwindigkeiten sind vorzugsweise individuell einstellbar. Dies kann in an sich bekannter Weise beispielsweise durch den Einsatz von Schrittmotoren mit veränderbarer Drehzahl erfolgen. Der Antrieb kann bei einer einfacheren Ausführungsvariante auch über einen gemeinsamen Antriebsmotor und entsprechende Übersetzungsgetriebe erfolgen; dann sind die Drehgeschwindigkeitsverhältnisse jedoch nicht ohne weiteres variierbar. Die relativen Drehpositionen (Phasen) des Filterrads und der Blendenräder sowie der Blendenräder untereinander im Stillstand sind in an sich bekannter Weise einstell- bzw. festlegbar.

Die Fig. 2 zeigt eine typische Ausführungsform des Filterrads 20. Dieses weist längs seines peripheren Bereichs drei kreisringsegmentförmige Fenster auf, in denen je ein Farbfilter 21, 22 und 23 angeordnet ist. Zwischen den Fenstern bzw. den Farbfiltern 21, 22 und 23 befinden sich drei lichtundurchlässige Zwischenbereiche 24. Die Farbfilter sind in an sich bekannter Weise für die Grundfarben Rot, Blau und Grün durchlässig. Die Farbfilter 21, 22 und 23 erstrecken sich beispielsweise über einen Winkelbereich von je 80°. Die lichtundurchlässigen Zwischenbereiche nehmen jeweils 40° ein. Die Lage des Beleuchtungsstrahlengangs 10 ist durch einen Kreis angedeutet.

In einer anderen Ausführungsform kann das Filterrad in an sich bekannter Weise auch mit vier Farbfiltern ausgestattet sein, wodurch eine vierkanalige Abtastung ermöglicht wird. Die vierte Farbe kann beispielsweise Infrarot oder auch Weiss (gefiltert oder ungefiltert) sein.

Das Blendenrad 30 ist in Fig. 3 dargestellt. Es besteht aus einer lichtundurchlässigen Scheibe mit einer kreisringsegmentförmigen Aussparung. Die Aussparung erstreckt sich über einen Winkelbereich von z.B. 120° und bildet einen Durchlassbereich 31. Der verbleibende Teil der Scheibe stellt einen Unterbrechungsbereich 32 dar, der sich über einen Winkelbereich von 240° erstreckt.

Das in Fig. 4 dargestellte Blendenrad 40 ist im Prinzip gleich aufgebaut wie das Blendenrad 30. Sein Durchlassbereich 41 ist jedoch wesentlich grösser und erstreckt sich z.B. über 180°, so dass sein Unterbrechungsbereich 42 gleich gross ist und sich ebenfalls über 180° erstreckt.

Das Filterrad 20 öffnet den Beleuchtungsstrahlengang bei jeder Umdrehung dreimal für jeweils 80/360 Teile der Umdrehungsdauer und unterbricht ihn dazwischen jeweils für 40/360 Teile der Umdrehungsdauer. Während der Öffnungsperioden wird das Licht durch die Filter 21, 22 und 23 entsprechend eingefärbt.

Das Blendenrad 30 unterbricht den Beleuchtungsstrahlengang bei jeder Umdrehung einmal während 240/360 Teilen der Umdrehungsdauer und gibt ihn dann für 120/360 Teile der Umdrehungsdauer wieder frei. In analoger Weise unterbricht das Blendenrad 40 den Beleuchtungsstrahlengang jeweils für die halbe Umdrehungsdauer und gibt ihn für die andere Hälfte seiner Umdrehungsdauer wieder frei.

Da das Filterrad 20 und die beiden Blendenräder 30 und 40 im Beleuchtungsstrahlengang hintereinander angeordnet sind, ergibt sich hinsichtlich der Lichtdurchlässigkeit eine logische Und-Verknüpfung zwischen den drei Rädern. Das heisst, die Vorlage V und damit der Flächensensor 7 wird nur jeweils dann mit Licht beaufschlagt (Hell-Phase), wenn sich sowohl das Filterrad 20 als auch die Blendenräder 30 und 40 in Drehstellungen befinden, bei denen sie den Beleuchtungsstrahlengang freigeben. In allen anderen Drehstellungskombinationen gelangt kein Licht auf die Vorlage V bzw. den Flächensensor 7 (Dunkel-Phase).

Durch das Zusammenwirken des Filterrads 20 mit den Blendenrädern 30 und 40 ergibt sich ein sich zyklisch wiederholendes Muster von Hell- und Dunkelphasen, welches im wesentlichen durch die (in Drehrichtung gemessenen) Abmessungen (Winkelbereiche) der lichtdurchlässigen und lichtundurchlässigen Bereiche der Filter- und Blendenräder sowie durch die absoluten Drehgeschwindigkeiten und die Verhältnisse der Drehgeschwindigkeiten untereinander bestimmt sind. Die Dauer des Zyklus, nach welchem sich das Muster wiederholt, ergibt sich unmittelbar aus den Drehgeschwindigkeiten. Ausgehend von einer bestimmten Kombination von gegenseitigen relativen Drehstellungen (Phasenlagen) ist die Zyklusdauer diejenige Zeitspanne, bis dieselbe bestimmte Kombination von relativen Drehstellungen (Phasenlagen) wieder erreicht ist. Im Falle von ganzzahligen gegenseitigen Verhältnissen der Drehgeschwindigkeiten ist die Zyklusdauer durch das kleinste gemeinsame Vielfache der Kehrwerte der Drehgeschwindigkeiten gegeben.

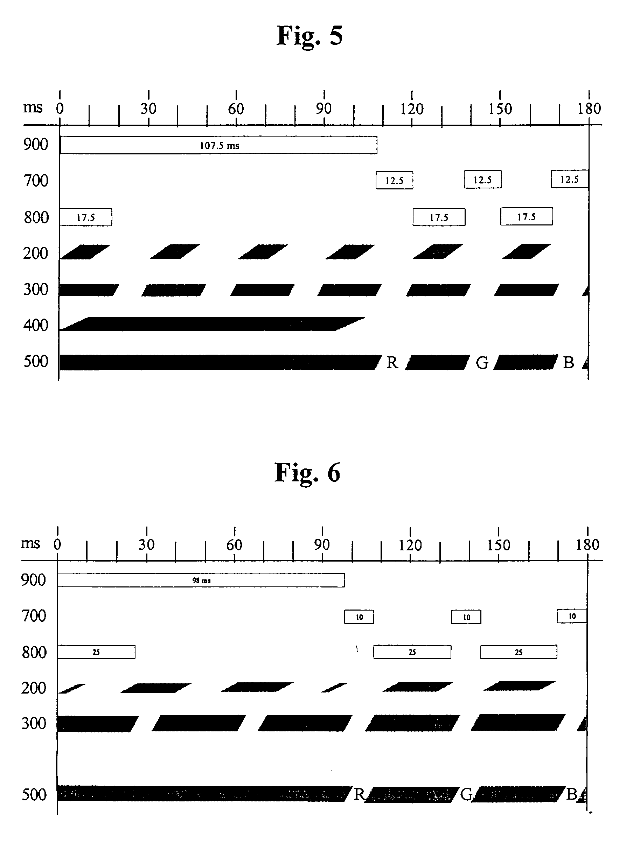

In Fig. 5 ist ein Zeit-Diagramm und das daraus resultierende zyklische Muster (Längen und zeitliche Abfolge) der Hell- und Dunkelphasen für den in den Figuren 1-4 gezeigten Farbverschluss F dargestellt. Dabei ist angenommen, dass sich das Filterrad 20 mit einer Geschwindigkeit von 2 Umdrehungen pro 180 ms, das erste Blendenrad 30 mit einer Geschwindigkeit von 6 Umdrehungen pro 180 ms und das zweite Blendenrad 40 mit einer Geschwindigkeit von 1 Umdrehung pro 180 ms dreht. Die Drehgeschwindigkeiten verhalten sich also wie 2:6:1, die Zyklusdauer beträgt 180 ms.

Im Diagramm bezeichnen dunkle Streifen Dunkelphasen und helle Streifen Hellphasen des Filterrads 20 (Zeile 200), der beiden Blendenräder 30 und 40 (Zeilen 300 und 400) und der resultierenden Exposition der Vorlage bzw. des Flächensensors 7 (Zeile 700). Wie man erkennt, ergibt sich eine resultierende Abfolge (Zeile 500), die aus einer relativ langen, mehr als die halbe Zykluszeit dauernden Dunkelphase und drei relativ kurzen Hellphasen besteht, welch letztere durch zwei relativ kurze, aber etwas länger als die Hellphasen dauernde Dunkelphasen unterbrochen sind. Während der drei Hellphasen wird der Flächensensor 7 mit Messlicht jeweils einer der drei Farben Rot, Blau und Grün beaufschlagt (Zeile 700), während der jeweils anschliessenden kurzen Dunkelphasen und des ersten Teils der langen Dunkelphase erfolgt die Auslesung der Abtastsignale aus dem Flächensensor 7 (Zeile 800). Die lange Dunkelphase wird zum Transport und für die Positionierung der Vorlage benutzt (Zeile 900).

Die hier gezeigte Abfolge ist geeignet für eine Situation, wo der Transport und die Positionierung des die Vorlagen aufweisenden Films (Vorschub, Andrücken, Beruhigen etc.) ca. 60% der gesamten Zykluszeit ausmacht. Die Expositionszeiten für die einzelnen Farben betragen in diesem Fall jeweils 12.5 ms, die Auslesezeiten für den Flächensensor 7 betragen jeweils 17.5 ms. Unter der Annahme, dass der Querschnitt des Beleuchtungsstrahlengangs 10 im Bereich des Farbverschlusses F 30° Drehwinkel entspricht, ergeben sich durch das schnell drehende Blendenrad 30 Öffnungs- und Schliesszeiten (Flankensteilheit) von ca. 2.5 ms.

Wie man erkennt, wäre das Blendenrad 40 bei diesem Beispiel eigentlich gar nicht notwendig. In einer Abwandlung mit kürzerer Expositionszeit des Flächensensors und längerer Auslesezeit würde es aber verhindern, dass während des Auslesens der Abtastsignale für die Farbe Blau Licht auf den Sensor fällt.

Fig. 6 zeigt ein Zeit-Diagramm für eine Ausführungsform der Vorrichtung mit nur einem Blendenrad 30. Ferner ist, wie man aus Zeile 200 erkennt, die Winkelverteilung der Farbfilter 21,22,23 und der lichtundurchlässigen Zwischenbereiche 24 ungleichmässig gewählt. Zugrundegelegt ist ein Drehgeschwindigkeitsverhältnis von 2:5 (Filterrad : Blendenrad) sowie wieder eine Zyklusdauer von 180 ms. In dieser Version steht für den Transport und die Positionierung der Vorlagen etwas weniger Zeit zur Verfügung. Durch die ungleichmässige Winkelverteilung im Filterrad und das gewählte Drehzahlverhältnis von 2:5 erhöht sich (bei etwa gleichen Expositionszeiten wie in Fig.5) die für das Auslesen der Abtastsignale jeweils zur Verfügung stehende Zeit um ca. 50%.

Durch die Kombination eines kontinuierlich drehenden Filterrads 20 mit einem oder mehreren kontinuierlich drehenden Blendenrad 30 bzw. -rädern 30 und 40 entfällt die zeitaufwendige Beschleunigung von Filtern oder Blenden, so dass extrem kurze Messzyklen möglich sind. Gleichzeitig können aber durch ein schneller als das Filterrad rotierendes Blendenrad auch ausreichend steile Anstiegs- und Abfallflanken der Hell- und Dunkelphasen (kurze Öffnungs- und Schliesszeiten) und so eine effizientere Ausnutzung des Messlichts erreicht werden.

Durch geeignete Bemessung der (in Drehrichtung gemessenen) Grössen (Winkelbereiche) der lichtdurchlässigen bzw. lichtundurchlässigen Bereiche des Filterrads 20 und der Blendenräder 30 und 40 sowie durch geeignete Wahl der Drehgeschwindigkeiten des Filterrads und der Blendenräder sowie der gegenseitigen Verhältnisse ihrer Drehgeschwindigkeiten kann das sich zyklisch wiederholende Muster (Zeitpunkt, Dauer) der aus dem Zusammenwirken der Filter- und Blendenräder resultierenden Hell- und Dunkelphasen in weiten Grenzen den jeweiligen Gegebenheiten und Erfordernissen angepasst werden. Der genaue Ablauf eines Zyklus hängt von der Anwendung der Vorrichtung ab. Je nach Bedarf für Filmtransport, Belichtungszeiten, Auslesegeschwindigkeit des Flächensensors etc. kann der Zyklus sehr unterschiedlich ausfallen. Die Kombination von zwei bis drei verschieden schnell rotierenden Filter- und Blendenrädern erlaubt es, die verschiedensten ungleichmässigen Belichtungsabfolgen zu erzeugen und durch Variation der Drehzahlen bei Bedarf auch einfach an sich ändernde Erfordernisse anzupassen.

In den gezeigten Ausführungsbeispielen rotiert das den kleineren Durchlassbereich aufweisende Blendenrad mit einer grösseren Drehgeschwindigkeit als das den grösseren Durchlassbereich aufweisende Blendenrad. Selbstverständlich könnten die Drehgeschwindigkeiten aber auch umgekehrt gewählt sein. Ferner ist es auch möglich, mehr als zwei Blendenräder vorzusehen. Und schliesslich kann die Abtastung auch in mehr als drei oder vier Farbkanälen erfolgen, wobei das Filterrad dann mit einer entsprechend grösseren Anzahl von Farbfiltern versehen wäre.

## Patentansprüche

1. Farbsequentielle fotoelektrische Abtastvorrichtung für transparente Vorlagen, insbesondere Bilder auf fotografischen Filmen, mit einer Lichtquelle (1) zur Beleuchtung einer positionierten Vorlage (V), mit einem Farbverschluss (F) zur sequentiellen farblichen und intensitätsmässigen Modulation des die Vorlage beaufschlagenden Lichts, mit einem fotoelektrischen Flächensensor (7), der von der Vorlage durchgelassenes Licht empfängt und zweidimensional bildpunktweise in elektrische Abtastsignale umwandelt, und mit optischen Mitteln (6), um die Vorlage (V) auf den Flächensensor (7) abzubilden, sowie mit einer Elektronik (8) zur Ansteuerung des Flächensensors (7) und zur Auslesung der von diesem erzeugten Abtastsignale, dadurch gekennzeichnet, dass der Farbverschluss (F) aus einer Kombination von einem drehbar angetriebenen Filterrad (20) und mindestens einem zum Filterrad koaxial drehbar angetriebenen Blendenrad (30) besteht, wobei das Filterrad (20) und das mindestens eine Blendenrad (30) mit unterschiedlichen Drehgeschwindigkeiten rotieren, welche zu einander in einem starren Verhältnis stehen.

2. Vorrichtung nach Anspruch 1, dadurch gekennzeichnet, dass mindestens ein Blendenrad (30) schneller rotiert als das Filterrad (20).

3. Vorrichtung nach einem der vorangehenden Ansprüche, dadurch gekennzeichnet, dass das Filterrad (20) in Drehrichtung hintereinander eine Anzahl von Farbfiltern (21,22,23) und zwischen jeweils zwei aufeinanderfolgenden Farbfiltern befindliche lichtundurchlässige Zwischenbereiche (24) aufweist, welche Farbfilter (21,22,23) und Zwischenbereiche (24) bei der Drehung des Filterrads (20) sequentiell in den Beleuchtungsstrahlengang (10) eingeführt werden, dass das mindestens eine Blendenrad (30) in Drehrichtung hintereinander wenigstens einen lichtdurchlässigen Durchlassbereich (31) und einen lichtundurchlässigen Unterbrechungsbereich (32) aufweist, welche Durchlass- und Unterbrechungsbereiche (31,32) bei der Drehung des Blendenrads (30) sequentiell in den Beleuchtungsstrahlengang (10) eingeführt werden, und dass die in Drehrichtung gemessenen Grössen der Farbfilter (21,22,23) und der Zwischenbereiche (24) des Filterrads (20) sowie der Durchlassbereiche (31) und Unterbrechungsbereiche (32) des mindestens einen Blendenrads (30) sowie die Drehgeschwindigkeiten des Filterrads (20) und des mindestens einen Blendenrads (30) so auf einander abgestimmt sind, dass sich eine gewünschte zyklische Abfolge und Dauer von Dunkelphasen, während welcher der Flächensensor (7) kein Licht empfängt, und Hellphasen, während welcher der Flächensensor (7) mit unterschiedlich eingefärbtem Licht beaufschlagt wird, ergibt.

4. Vorrichtung nach einem der vorangehenden Ansprüche, dadurch gekennzeichnet, dass der Farbverschluss (F) zwei koaxial drehbar angetriebene Blendenräder (30,40) enthält, welche unterschiedlich grosse Durchlassbereiche (31,41) und entsprechend unterschiedlich grosse Unterbrechungsbereiche (32,42) aufweisen und mit unterschiedlichen Drehgeschwindigkeiten rotieren, die in einem starren Verhältnis zu einander stehen.

5. Vorrichtung nach Anspruch 4, dadurch gekennzeichnet, dass das den kleineren Durchlassbereich (31) aufweisende Blendenrad (30) mit einer grösseren Drehgeschwindigkeit rotiert als das den grösseren Durchlassbereich (41) aufweisende Blendenrad (40).

6. Vorrichtung nach Anspruch 4, dadurch gekennzeichnet, dass das den kleineren Durchlassbereich (31) aufweisende Blendenrad (30) mit einer kleineren Drehgeschwindigkeit rotiert als das den grösseren Durchlassbereich (41) aufweisende Blendenrad (40).

7. Vorrichtung nach einem der vorangehenden Ansprüche, dadurch gekennzeichnet, dass die in Drehrichtung gemessenen Grössen der Farbfilter (21,22,23) und der Zwischenbereiche (24) des Filterrads (20) sowie der Durchlassbereiche (31) und Unterbrechungsbereiche (32) des mindestens einen Blendenrads (30) sowie die Drehgeschwindigkeiten des Filterrads (20) und des mindestens einen Blendenrads (30) so auf einander abgestimmt sind, dass sich eine sich zyklisch wiederholende Abfolge von einer relativ langen Dunkelphase und einer Anzahl von durch relativ kurze Dunkelphasen unterbrochenen relativ kurzen Hellphasen mit unterschiedlicher Lichtfarbe ergibt, wobei die Anzahl der Hellphasen der Anzahl der Farbfilter (21,22,23) im Filterrad (20) entspricht.
